Europäisches Patentamt

European Patent Office

Office européen des brevets

(11) Publication number: **0 061 929**
**A1**

## (12) EUROPEAN PATENT APPLICATION

(21) Application number: **82301674.6**

(22) Date of filing: **30.03.82**

(51) Int. Cl.³: **B 65 D 53/04**
**//B65D83/06**

(30) Priority: **31.03.81 US 249434**

(43) Date of publication of application:
**06.10.82 Bulletin 82/40**

(84) Designated Contracting States:
**DE FR GB IT**

(71) Applicant: **MINNESOTA MINING AND MANUFACTURING COMPANY**
**3M Center, P.O. Box 33427**
**St. Paul, MN 55133(US)**

(72) Inventor: **Klassen, Donald J.**
**2501 Hudson Road P.O. Box 33427**
**Saint Paul Minnesota 55133(US)**

(74) Representative: **Baillie, Iain Cameron et al,**
**c/o Ladas & Parry Isartorplatz 5**
**D-8000 München 2(DE)**

(54) Induction-sealable container closure.

(57) An article for at least partially sealing the open end (3) of a container (1) holding a powdered material is disclosed. The article helps reduce the possibility that the contents thereof can be suddenly ingested or inhaled. The article comprises (a) a compressible disc-shaped body (4) having a plurality of apertures (11) passing through it, the apertures (11) being equally angularly displaced from adjacent aperture (11) and being circumferentially located between the center of the body and the outer edge of the body.

FIG.1

# INDUCTION-SEALABLE CONTAINER CLOSURE

## Technical Field

This invention is related to container closures. More particularly it relates to closures for containers of powdered materials, particularly to innerseal systems for such containers.

## Background Art

The use of finely divided powders such as corn starch and talcum or baby powder as a personal care product is common. Such powders are typically packaged in containers having a wide opening covered by an apertured dispensing cap. Usually these caps comprise an inner disk-like, apertured element that fits within the neck of the container opening, and an outer apertured element that fits over the inner element and the neck of the container opening. The inner and outer elements are concentrically positioned with respect to each other and are centrally, rotatably attached to each other so that the outer element can be rotated with respect to the inner element.

While such closures are in widespread use, they do exhibit certain disadvantageous characteristics. For example, they can be removed, even by small children, thereby leaving the container opening completely uncovered. This permits the contents to be readily spilled from the container, creating potential health hazards due to ingestion and inhalation of the powder. This is a particularly serious problem when small children ingest or inhale the powder.

Additionally, such closures do not prevent leakage of the powder from the container even when in the closed position. As a result, significant amounts of the powder can escape from the container and contaminate the surrounding area.

## Disclosure of the Invention

The present invention provides a closure for containers of powdered material that is affixed to the container and that virtually eliminates the possibility that the powder can suddenly be ingested or inhaled in large quantities. Additionally, the preferred aspect of the invention dramatically reduces leakage of the powder from the container when the closure is in the closed position.

In accordance with one aspect of the invention there is provided an article, useful as an innerseal to at least partially cover the open end of a container of powdered material comprising a disk-shaped body having a plurality of apertures therethrough, said apertures being equally angularly separated from adjacent apertures and being circumferentially located between the geometric center and the outer edge of said body, and wherein said body comprises a stiff, compressible substrate having first and second surfaces, a layer of a metal foil, capable of inductively transferring heat to adjacent layers, on said first surface of said substrate, and a heat-activated sealing material on the exposed surface of said metal foil.

In another aspect of the invention there is provided a closure system comprising the above-mentioned innerseal and a circular cap.

In yet another aspect of the invention there is provided a container having the above-mentioned closure system applied thereto.

In still another aspect of the invention there is provided a method for sealing the open end of a container of powdered material.

## Brief Description of the Drawings

The present invention will be further understood with reference to the accompanying drawings wherein like reference characters refer to the same elements throughout the several views and wherein

FIGURE 1 is a perspective view of the invention partially broken away to show details thereof;

FIGURE 2 is an exploded view of a portion of the innerseal aspect of the invention, this view being greatly enlarged; and

FIGURES 3-6 are plan views of alternative embodiments of the innerseal aspect of the invention.

## Detailed Description

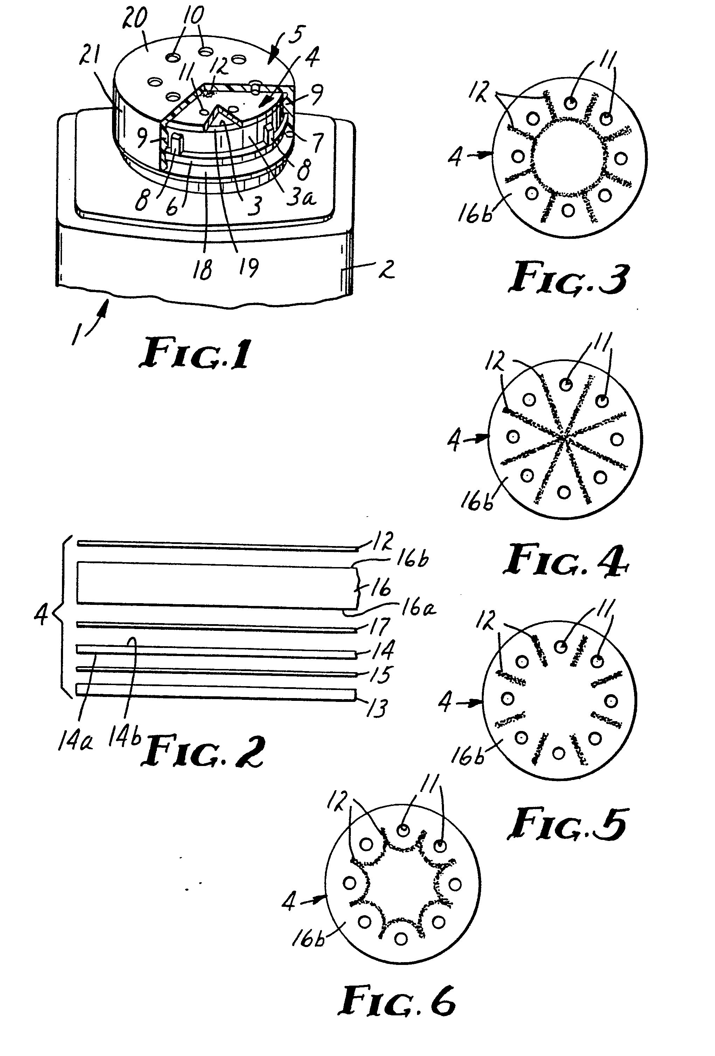

Referring now to FIG. 1, there is shown a container 1, comprising a hollow body 2 having a circular open end 3 covered by a disk-shaped innerseal 4 and an outer, circular cap 5.

Open end 3 preferably has a neck portion 3a, and an exterior ridge 6 which cooperatively engages interior ridge 7 of cap 5. Additionally, open end 3 preferably has stops 8 located on exterior ridge 6 to engage interior stop 9 on cap 5. Ridge 7 and stop 9 are preferably separated from each other a distance sufficient to allow ridge 6 to ride therebetween. Stops 8 are located a sufficient distance apart so that cap 5 can be rotated between a totally closed position (i.e., apertures 10 and 11 out of registry with each other) and a totally open position (i.e., apertures 10 and 11 in registry with each other). Ridge 18 is also provided on neck portion 3a to act as a base beyond which cap 5 cannot extend.

Ridges 6 and 7 cooperatively engage or mate with each other and act in concert to hold cap 5 onto neck portion 3a by assisting in compressing innerseal 4 around rim 19 of neck 3a. The surfaces of ridges 6 and 7 that engage or mate with each other are preferably sloped.

Container 1 can have any configuration desired. FIG. 1 shows one useful configuration, here a generally oblong, hollow body closed at one end and open at the other. Additionally, container 1 can be made from any rigid material including, for example, glass, metal, and polymeric materials such as polyethylene, polypropylene, polyester, and so forth, provided that innerseal 4 can be induction sealed thereto. The foregoing container materials are only representative of those that may be used in the container.

Cap 5 comprises the outer element of the closure system of the invention. It may be made from any rigid material and may be made of the same or a different material than that of container 1.

Cap 5 comprises a circular base 20 and a wall 21 rising perpendicularly therefrom and totally encircling base 20. Base 20 and wall 21 define a cavity into which innerseal 4 is positioned. A plurality of apertures or openings 10 are provided through base 20 of cap 5. They are equally angularly separated from adjacent apertures and are circumferentially located between the geometric center and the outer edge of base 20. Additionally, they are each preferably located the same radial distance from the geometric center of the base 20. The exact distance from the center of base 20 to the center of apertures 10 is selected so that said apertures can be positioned in registry with apertures 11 of innerseal 4. Preferably apertures 10 are slightly smaller in diameter than apertures 11.

Innerseal 4 comprises a disk-shaped body having a plurality of apertures or holes 11 therethrough. A centrally positioned portion of a fastening material 12 is shown joining innerseal 4 to cap 5. Apertures 11 are equally angularly separated from adjacent apertures 11 by the same angle as are apertures 10 of cap 5. Additionally, they are each preferably located the same radial distance from the geometric center of innerseal 4 as apertures 10 are located from the center of cap 5. The center of apertures 11 are circumferentially located between the center and the outer edge of innerseal 4 so that they can be positioned in registry with apertures 10 of cap 5.

Innerseal 4 has the same shape as opening 3 of container 1. It is dimensioned so that it rests on rim 19 of opening 3 and covers all of said opening except for those portions left open by apertures 11. It is preferred that innerseal 4 have a slightly larger diameter than opening 3.

Innerseal 4 is sufficiently compressible (i.e., it can be reduced in thickness by the application of pressure) to compensate for any minor surface irregularities in rim 19 and provide intimate contact with said rim. Additionally, when cap 5 is placed over the innerseal 4, the innerseal molds itself around rim 19. Innerseal 4 is sufficiently thick so that there is essentially no open space between it and cap 5. Within this limitation, it may be of any desired thickness. It has been found that thicknesses in the range of about 0.5 to 1.5 millimeters (mm) are useful.

The innerseal 4 may be made from a variety of materials including polymers, paper and metal foils. At least one surface of the innerseal bears a heat-activatable material for contact with rim 19 of open end 3. Additionally, innerseal 4 is preferably rigid so as to resist bowing or sagging.

An example of a useful innerseal construction is illustrated in Fig. 2. This construction comprises a heat-activatable layer 13 adhered to side 14a of metal foil layer 14 by a first adhesive layer 15. Side 14b of metal foil layer 14 is adhered to side 16a of a substrate 16 by means of a second adhesive layer 17. A bonding material 12 may be located on the side 16b of substrate 16, although it is preferably applied to cap 5 before the innerseal 4 is inserted therein.

This construction may be prepared by coating side 14a of metal foil layer 14 with adhesive layer 15. After adhesive layer 15 is dried, heat-activatable layer 13 is applied thereof. Adhesive layer 17 may then be coated onto side 14b of layer 14 and then side 16a of substrate 16 applied thereto. It is not necessary to dry layer 17 before substrate 16 is applied thereto. The desired innerseal configuration and apertures may then be punched out of the bulk construction.

Common coating techniques, such as rotogravure coating, may be employed to apply adhesive layers 15 and 17. The amount of adhesive utilized is sufficient to provide strong bonds between the layers. For example coating weights between 0.3 and 1 milligram/cm$^2$ for layers 15 and 17 are satisfactory.

A number of materials may be used for the individual components of the construction of Figure 2. For example, heat-activatable layer 13 may comprise a heat-activatable adhesive or a thermoplastic organic polymer. Preferably it is readily heat-activatable.

Examples of thermoplastic organic polymers useful as layer 13 include polyethylene, polypropylene, copolymers of ethylene, copolymers of propylene, polyvinyl chloride, ethylene vinylacetate, acrylic polymers, polyvinylidene chloride polymers, etc.

Another class of materials useful as heat-activatable layer 13 include composite laminated films made up of two or more organic films. They may be prepared by a variety of techniques including coextrusion, lamination, and the like. A particularly useful film of this type is described in U.S. Patent 3,188,265. It is made up of a difficultly heat-sealable organic polymer film layer, such as polyester, with a readily heat-sealable organic polymeric film layer, such as polyethylene, thereon. The two layers are chemically interfacially united by a bond so strong that the layers cannot be mechanically separated.

The heat-activatable layer 13 is sufficiently thick to provide a strong bond between the innerseal 4 and rim 19. Its exact thickness is not, of itself, critical to the invention. It has been found that layers in the range of 0.01 to 0.1 millimeter thick provide satisfactory results.

Metal foil layer 14 is preferably flexible. It receives and converts a radio frequency of a predetermined wavelength range (e.g., 40 to 800 kilohertz) into thermal energy. This thermal energy is inductively transferred to heat-activatable layer 13 causing it to soften. Typically, metal foil layer 14 comprises tin, aluminum, or copper foil, or the like. Although the thickness of layer 14 is not critical to the invention, it is preferably from 0.01 to 0.1 millimeter thick.

Substrate 16 is the compressible layer in the embodiment shown and provides rigidity to innerseal 4 and is preferably not thermoplastic. Pulp board is one example of a material useful as substrate 16. The thickness of substrate 16 is not critical to the invention. However, it has been found that thicknesses in the range of 0.5 to 1 millimeter are most useful.

A variety of adhesives may be used as layers 15 and 17. The nature of the adhesive employed is not critical to the invention provided that it securely anchor the respective layers to each other and provided further that it can withstand the temperatures generated during induction sealing and does not interfere with induction sealing.

Examples of adhesives useful as layers 15 and 17 include Adcote 503A, a two-component adhesive having a viscosity of about 700-1,200 cps at 25°C, a density of 0.95 grams/cubic centimeter available from Morton Chemical Company; Unoflex-E, a one-component urethane prepolymer having a viscosity of 4,000-8,000 cps at 25°C available from Polymer Industries; and No. 49001 polyester resin having a slight tack at 25°C, a specific gravity of 1.22, being soft and plastic at 25°C, available from E. I. duPont de Nemours and Company Incorporated.

Bonding material 12 holds innerseal 4 in position in cap 5 during placement of said cap on container 1. Bonding material 12 has a torque resistance in the range of 10 to 60, preferably 15 to 30, Newton-meter. At a torque-resistance of above 60 Newton-meter, the cap 5 is too difficult to break away from the innerseal 4 to be of practical use. At a torque-resistance of below 10 Newton-meter, the bond can be broken by jarring actions encountered during shipping and also when the closure is applied to the container. The torque resistance is measured according to ASTM D 3198-73. An Owens-Illinois torque tester available from Owens-Illinois, Inc., Glass Container Division is useful for measuring the torque resistance.

Although bonding material 12 may be applied directly to innerseal 4, it is preferably applied to cap 5 followed by insertion of innerseal 4 into cap 5 so that the innerseal 4 fits concentrically therein. The top surface 16b of the innerseal 4 contacts the bonding material 12. Innerseal 4 is preferably inserted into cap 5 so that apertures 10 of the cap 5 and apertures 11 of the innerseal 4 are not in registry.

Bonding material 12 may be applied to cap 5 by brushing, dripping from a nozzle, spraying, and the like. It is preferably applied as a thin and has a thin dried thickness (i.e., 0.005 to 0.01 millimeter thick) layer. The bonding material 12 may either be applied to the entirety of the surface of the cap 5 or selectively to the surface of the cap.

The assembled cap 5 and innerseal 4 are then placed over open end 3 of a container 1 of powdered material, adjusted to a position such that stops 8 contact stops 9, and induction sealed by techniques known to the art.

While the exact configuration of the bonding material 12 is not critical to the invention, it has been found that certain configurations dramatically reduce powder leakage from the container. For example, selective application of the bonding material 12 to provide the patterns shown in FIGS. 3-6, here on innerseal 4 rather than on cap 5, provide unexpected results. As can be seen, these patterns each represent a selective application of the bonding material 12 to the area between adjacent apertures. Surprisingly, these configurations reduce leakage more effectively than does an overall application of bonding material 12. It is also noted that where an overall application of bonding material 12 is utilized, it is preferred that a narrow band or margin around the outer edge of the cap 5 and the innerseal 4 be left free of the bonding material.

Preferably these materials are adhesive in nature and comprise one or more organic materials. They may be pressure-sensitive materials, hot melt materials, solvent soluble materials, and the like.

A wide variety of materials are useful as bonding material 12.

A particularly useful bonding material comprises a water dispersed synthetic elastomer-based adhesive having a viscosity of about 54,500 cps at 25°C, available as Scotch-Grip Brand® Industrial Adhesive 871 from 3M Company. Other bonding materials having the requisite torque resistance are also known and are included within the scope of this invention.

Claims

1. An article for use as an innerseal (4) to at least partially cover the open end of a container of powdered material comprising a compressible disk-shaped body having a plurality of apertures (11) therethrough, said apertures (11) being equally angularly separated from adjacent apertures (11) and being circumferentially located between the outer edge and the geometric center of said body, wherein said body comprises a stiff, compressible substrate (16) having first and second surfaces (16a and 16b), a layer of a metal foil (14), capable of inductively transferring heat to adjacent layers, on said first surface (16a) of said substrate (16), and a heat-activated sealing material (13) on the exposed surface (14a) of said metal foil (14).

2. An article according to claim 1 further comprising a bonding material (12) on said second surface (16b) of said substrate (16), said bonding material (12) having a torque resistance in the range of 10 to 60 Newton-meter.

3. An article according to claim 2 wherein said bonding material (12) is selectively applied to said substrate (16) between said apertures (11).

4. An article according to claim 2 wherein said second surface (16b) of said substrate (16) has a narrow band around the outer edge thereof free from said bonding material (12).

5. An article according to claim 1 wherein said substrate (16) comprises pulp board having a thickness of from 0.5 to 1 millimeter, said metal foil (14) comprises an aluminum foil having a thickness of from 0.01 to 0.1 millimeter, and said heat-activated sealing material (13) comprises a difficultly heat-sealable organic polymeric film interfacially united to a readily heat-sealable organic polymeric film, and wherein said heat-activated material comprising a layer having a thickness of from 0.01 to 0.1 millimeter, and wherein said difficultly heat-sealable organic polymeric film is adhered to said aluminum foil.

6. An article according to claim 5 wherein said difficulty heat-sealable organic polymeric film comprises a polyester film and said readily heat-sealable organic polymeric film is polyethylene.

7. A combination comprising an article according to claim 1 joined to a circular cap (5) having a circular base (20) and a wall (21) rising perpendicularly from the outer edge thereof and totally encircling said base (20), and, with said base (20), defining a cavity,
wherein said base has a plurality of openings (10) passing therethrough, said openings (10) being equally angularly displaced from adjacent openings and being circumferentially located between the outer edge and the center of said base (20), and
wherein said article is concentrically located in said cavity and held to said cap (5) by means of a bonding material (12) having a torque resistance of from 10 to 60 Newton-meter, and
wherein the distance from the center of said disk-shaped body to said apertures is equal to the distance from the center of said base to said openings.

8. A combination according to claim 7 wherein said bonding material (12) is selectively applied to said cap (5) between said openings (10).

9. A container (1) for holding powdered material comprising

a hollow body (2) having one closed end and one open end (3);

an innerseal (4) covering said open end (3) and being induction-sealable thereto, said innerseal comprising a disk-shaped body having a plurality of apertures (11) therethrough, said apertures (11) being equally angularly separated from adjacent apertures (11) and being circumferentially located between the outer edge and the geometric center of said body, and wherein said disk-shaped body comprises a stiff, compressible substrate (16) having first and second surfaces (16a and 16b), a layer of a metal foil (14), capable of inductively transferring heat to adjacent layers, on said first surface (16a) of said substrate (16), and a heat-activated sealing material (13) on the exposed surface of said metal foil (14a), and

a circular cap (5) having a circular base (20) and a wall (21) rising perpendicularly from the outer edge thereof and totally encircling said base (20), and, with said base (20), defining a cavity, said innerseal (4) being concentrically positioned in said cap (5) and being joined thereto, said cap (5) covering said open end (3) of said container (1), said cap (5) having a plurality of openings (10) passing therethrough, said openings (10) being equally angularly separated from adjacent openings (10) and being circumferentially located between the outer edge and the center of said cap (5), wherein the distance from the center of said cap (5) to said openings (10) is equal to the distance from the center of said innerseal (4) to said apertures (11), and wherein said cap (5) is attached to said innerseal (4) by means of a bonding material (12) having a torque resistance of from 10 to 60 Newton-meter.

10. A method of sealing the open end (3) of a container (1) of powdered material comprising the steps of: providing an innerseal (4) comprising a compressible disk-shaped body having a plurality of apertures (11) therethrough, said apertures (11) being equally angularly separated from adjacent apertures (11) and being circumferentially located between the outer edge and the geometric center of said body, wherein said body comprises a stiff, compressible substrate (16) having first and second surfaces (16a and 16b), a layer of a metal foil (14), capable of inductively transferring heat to adjacent layers, on said first surface (16a) of said substrate (16), and a heat-activated sealing material (13) on the exposed surface (14a) of said metal foil (14);

providing a circular cap (5) having a circular base (20) and a wall (21) rising perpendicularly from the outer edge thereof and totally encircling said base (20), and with said base (20) defining a cavity, wherein said base (20) has a plurality of openings (10) passing therethrough, said openings (10) being equally angularly displaced from adjacent openings (10) and being circumferentially located between the outer edge and the center of said base (20),

adhering said second surface (16b) of said innerseal (4) to said cap (5) in said cavity by means of a bonding material (12) having a torque resistance of from 10 to 60 Newton-meter; wherein said innerseal (4) is circumferentially positioned in said cap (5), and wherein said apertures (11) in said innerseal (4) are not in registry with said openings (10) in said cap (5),

placing said cap (5) over the open end (3) of said container (1) so that said heat-activatable layer (13) of said innerseal contacts (4) said container (1); and

induction sealing said innerseal (4) to said container (1).

0061929

1/1

FIG.1

FIG.2

FIG.3

FIG.4

FIG.5

FIG.6

| | **DOCUMENTS CONSIDERED TO BE RELEVANT** | | **CLASSIFICATION OF THE APPLICATION (Int. Cl. ³)** |
|---|---|---|---|
| Category | Citation of document with indication, where appropriate, of relevant passages | Relevant to claim | B 65 D 53/04// |
| A | US - A - 3 237 819 (FILLMORE)<br>+ Fig. 1-4 +<br>-- | | B 65 D 83/06 |
| A | AT - B - 223 528 (BRUDER)<br>+ Totality +<br>-- | | |
| A | DE - B - 1 194 760 (JOHNSON & JOHNSON)<br>+ Claims; fig. 1,5 +<br>-- | | |
| A | US - A - 4 171 084 (SMITH)<br>+ Claims +<br>-- | | **TECHNICAL FIELDS SEARCHED (Int.Cl. ³)**<br><br>B 65 D 25/00<br>B 65 D 39/00 |
| A | GB - A - 2 037 718 (MANUFACTURE GENERALE DE JOINTS)<br>+ Claims; fig. 2 +<br>---- | | B 65 D 41/00<br>B 65 D 43/00<br>B 65 D 51/00<br>B 65 D 53/00<br>B 65 D 65/00<br>B 65 D 77/00<br>B 65 D 83/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search<br>VIENNA | Date of completion of the search<br>01-07-1982 | Examiner<br>CZUBA | |

EPO Form 1503.1 06.78